(19) Europäisches Patentamt / European Patent Office / Office européen des brevets

(11) **EP 1 561 357 B1**

(12) **EUROPEAN PATENT SPECIFICATION**

(45) Date of publication and mention of the grant of the patent:
**20.01.2016 Bulletin 2016/03**

(51) Int Cl.:
***H04W 16/18*** *(2009.01)*

(21) Application number: **03794984.9**

(22) Date of filing: **03.09.2003**

(86) International application number:
**PCT/EP2003/009770**

(87) International publication number:
**WO 2004/025980 (25.03.2004 Gazette 2004/13)**

(54) **SYSTEM AND METHOD FOR DIMENSIONING A CDMA NETWORK**

SYSTEM UND VERFAHREN ZUR DIMENSIONIERUNG EINES CDMA-NETZWERKS

SYSTEME ET PROCEDE DE DIMENSIONNEMENT D'UN RESEAU AMRC

(84) Designated Contracting States:
**AT BE BG CH CY CZ DE DK EE ES FI FR GB GR HU IE IT LI LU MC NL PT RO SE SI SK TR**

(30) Priority: **09.09.2002 IT TO20020784**

(43) Date of publication of application:
**10.08.2005 Bulletin 2005/32**

(73) Proprietor: **Telecom Italia S.p.A.**
**20123 Milano (IT)**

(72) Inventors:
• **FRANCESCHINI, Daniele**
  **I-10148 Torino (IT)**
• **CARETTI, Marco**
  **I-10148 Torino (IT)**

(74) Representative: **Battipede, Francesco et al**
**Telecom Italia S.p.A.**
**Piazza L. Einaudi, 8**
**20124 MIlano (IT)**

(56) References cited:
WO-A-00/49824     WO-A-00/79821
WO-A-98/24199     WO-A-03/003775
WO-A1-02/35872     US-A1- 2002 102 984

• BERNARDI DE R ET AL: "LOAD CONTROL STRATEGIES FOR MIXED SERVICES IN WCDMA" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 2 OF 3. CONF. 51, 15 May 2000 (2000-05-15), pages 825-829, XP000967985 ISBN: 0-7803-5719-1

**Description**

**TECHNICAL FIELD**

The present invention relates to a system and method for the dimensioning or general (analytical) planning of a CDMA (Code Division Multiple Access) network.

In particular, the present invention relates to a system and method for the analytical planing of a network for third generation UMTS (Universal Mobile Telecommunications System) mobile apparatuses which uses, as is well known, a radio interface based on the Code Division Multiple Access technique or CDMA.

**BACKGROUND ART**

The overall dimensioning (dimensioning) of a CDMA network consists, as is well known, of determining an estimate of the number and configuration of apparatuses constituting the mobile network able to meet determined requirements.

In particular, analytical planning allows, starting from planning requirements such as:

- Coverage Requirements:

    Planning area to be covered;
    Geo-morphologic information about the planning area;
    Propagation conditions;

- Capacity requirements:

    Available Frequency Spectrum;
    Traffic Forecast per user;
    Traffic Density over the area;

- Quality Requirements:

    Coverage Probability;
    Block Probability;
    User Throughput to be guaranteed;

the approximate determination of elements constituting the network, such as:

- Number of Base Transceiver Stations (BTS) or sites and configuration thereof;
- Equipment of the Transceiver Stations in terms of:

    - maximum power required and average power per traffic channel;
    - required base band processing capacity;

- Load per cell for geo-morphologically homogeneous area;
- Percentage of use of the code tree;
- Number of carriers used.

In the case of UMTS systems, which base their operation on a WCDMA (Wide CDMA) radio interface characterised, as is well known, by the "Soft Capacity" property, the prior art, for instance as reported in the book by H. Holma, A. Toskala, with the title "Radio Network Planning" on WCDMA for UMTS, Wiley & Sons Ltd. June 2000 recommends proceeding with the overall planning on the basis of the assumption that:

- dimensioning in terms of coverage (ability of the terminal to communicate) must be verified by analysing the network in regard to the radio link from the mobile terminal to the Base Transceiver Station (uplink); and
- dimensioning in terms of capacity (the ability of the network to provide services to the mobile terminal) must be verified by analysing the network in regard to the radio link from the Base Transceiver Station to the mobile terminal (downlink).

In other words, a first limitation of the prior art consists of its assumption that the effects of the uplink and of the downlink paths are distinct and that therefore they can be evaluated in separate, though sequential, fashion.

Based on experience, it seems that such an assumption is not adequate and that a correct dimensioning of the network must be conducted intersecting or combining the analysis of the uplink path with that of the downlink path.

A second limitation of the prior art relating to the dimensioning of the network by path, for instance for the uplink path, consists of the fact that it does not take into account that some services are negotiable, in particular thanks to the intrinsic characteristics of CDMA networks.

Both the first and the second limitation, individually or jointly, entail, in general, that analytical planning in accordance with the prior art is particularly prone to yield imprecise results, even in the order of 20-30% with respect to what can be obtained with more accurate methods.

WO 00/49824 described an admission control able to perform a load estimate based at least on a bearer request, and if the load estimate is above the limit, to attempt to make room for the requested bearer or bearers. Bearer requests resulting in the load being under a first predetermined limit are admitted. If a bearer request would result in the load being over the first predetermined limit, the admission control entity tries to make room for the bearer request, i.e. release resources without degrading the quality of service (QoS) provided for the existing bearers. The admission control entity may perform this by adjusting power control parameters, handover control parameters, or both. If the admission control entity is able to make enough room for the new bearer or bearers, the request is admitted.

## DISCLOSURE OF THE INVENTION

According to the present invention, a method for dimensioning a radio network as set forth in claim 1, a system for dimensioning a radio network as set forth in claim 7 and a computer product as set forth in claim 8 are provided. Embodiments of the invention are claimed in the dependent claims.

An aim of the present invention is to describe a new method for the general planning of a CDMA network.

An aim of the present invention is also a system able to implement the method according to the invention and a computer product which can be loaded into the memory of an electronic computer to carry out the method according to the invention.

The aim is achieved by the system and method for dimensioning a CDMA network as claimed.

According to a characteristic of the present invention, in dimensioning the network the method takes into account, for each type of path, the fact that each service can be negotiated dynamically.

According to another characteristic of the present invention, given the joint dimensioning, for the uplink and downlink path, verification steps are provided that are able to request or to review the input parameters or to negotiate the services dynamically.

Naturally, the invention also relates to the computer product able to be loaded directly into the internal memory of an electronic computer to carry out, when the product is executed on an electronic computer, the method according to the invention.

## BRIEF DESCRIPTION OF THE DRAWINGS

This and other characteristics of the present invention shall become readily clear from the following description of a preferred embodiment, provided by way of non limiting example with the aid of the accompanying drawings, in which:

Fig.1 shows a system for the general planning (dimensioning) of a network for mobile apparatuses;
Fig.2 shows a general block diagram of the method according to the invention; and
Fig.3A, Fig.3B, Fig.3C and Fig.3D together show a single flow chart describing the method according to the invention and related to the dimensioning of a radio network according to the invention.

## DESCRIPTION OF A PREFERRED EMBODIMENT

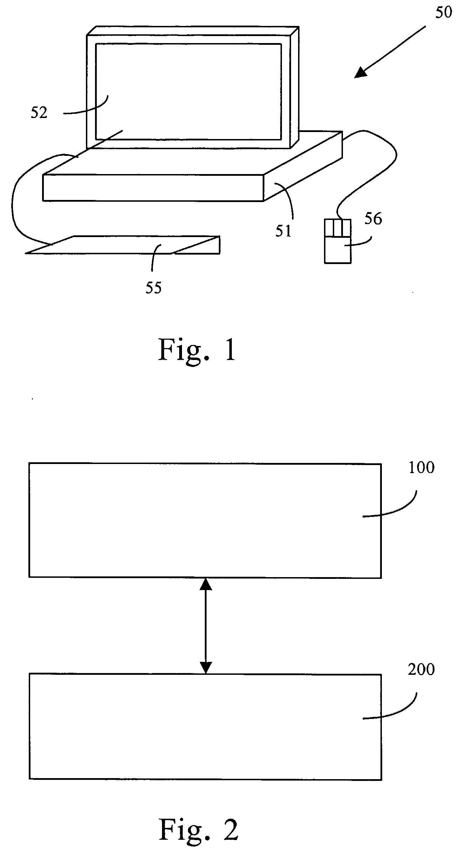

With reference to Fig. 1, a system for the general or analytical planning (known as "dimensioning") of a mobile telecommunications network comprises, for instance, a known computerised work station (Work Station) 50 having a processing sub-system (base module) 51, a display device (display) 52, a keyboard 55 and a pointing device (mouse) 56.

The Work Station 50, for example the model J5000 by Hewlett-Packard, with a 700 MHz CPUT, 128 Mbytes RAM, an 18 Gbyte hard disk drive and a Windows operating system, is able to process groups of programs, or modules, stored, for instance, in the RAM, and to visualise the results on the display 52.

In the described configuration, the system is able to allow, for instance, the dimensioning of a network for mobile equipment or terminals on the basis of computerised modules stored in the memory of the Work Station 50 and able to implement the method according to the invention as described below.

The method for the dimensioning of a mobile radio network based, for instance, on a WCDMA (Wide-band CDMA) radio interface comprises a plurality of steps that can be grouped in to logic blocks (Fig.2).

A first block (100) for preparing data for dimensioning the network.

A second block (200) for dimensioning the network considering, as shall be described in detail hereafter, the radio path from mobile to Base Transceiver Station (uplink path) and/or the radio path from Base Transceiver Station to mobile (downlink path).

In particular, in the second block 200, planning is conducted both by means of specific dimensioning steps for the uplink path and specific dimensioning steps for the downlink path, and through multiple interactions or feedback between the steps relating to the dimensioning of the uplink and of the downlink path.

Moreover, in the specific steps for dimensioning the uplink path, in a manner deemed to be novel, account is taken both of coverage and of traffic aspects and, for the downlink path, account is taken both of the limited number of orthogonal codes, typical for instance of UMTS networks, and of the limits of power per channel and total power of Base Transceiver Stations (or BTS). The method according to the invention allows to improve dimensioning both in regard to each path, considered individually, and for the two paths, considered jointly, as shall be made readily apparent in the description that follows.

In the first block 100 are therefore provided all input parameters necessary for the dimensioning of the network. Said parameters, of a known type, correspond to those generally used by the prior art to conduct the analytical planning of a mobile network and can be considered as starting specifications or planning requirements that must be met by the dimensioning.

In particular, said parameters comprise, for instance, as previously stated in the description:

- Coverage requirements or parameters, such as:

    o dimension in $Km^2$ of the planning area;
    o percentages of the planning area distinguished by type of area, for instance dense urban, urban, suburban, rural.

- Capacity requirements or parameters, such as:

    o initial number of carriers;
    o number of usable carriers;
    o maximum load sustainable per cell or $\eta_{MAX}$;
    o maximum percentage of use in terms of power of the BTS stations to assure their correct operation;
    o maximum power per traffic channel associated to each service on the downlink path;
    o expected percentage of soft handover connections;
    o number and type of services to be provided in the planning area under consideration. Each type of service (service) taken into consideration can be provided, as is well known, by means of appropriate radio channel (Radio Access Bearer - RAB) whereon the service is to be mapped distinguishing among RABs of the following types:

        ■ CS (Circuit Switched): Voice AMR (Adaptive Multi Rate);
        ■ CS (Circuit Switched): for instance video-telephony;
        ■ PS (Packet Switched): for instance Web Browsing.

The configurations of the parameters that define the RABs (radio bearers) belonging to the three aforementioned families are set out, for example, in the specification document 3GPPTS 34.108, published by the Consortium 3GPP.

- Quality Requirements or Parameters.
- Configuration Requirements or Parameters relating to possible strategies for the configuration or development of the radio network, such as:

    o Minimisation of the number of carriers used;
    o Minimisation of the number of sites used.

The latter parameters can, as will be readily apparent to a person versed in the art, influence the operations or functions carried out by the block 200, albeit without modifying the characteristics of the method according the invention.

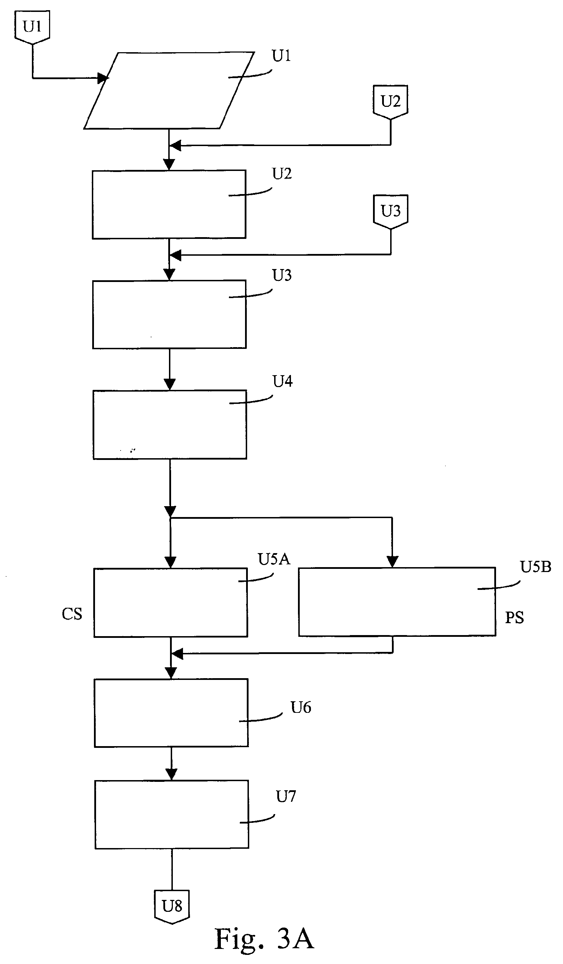

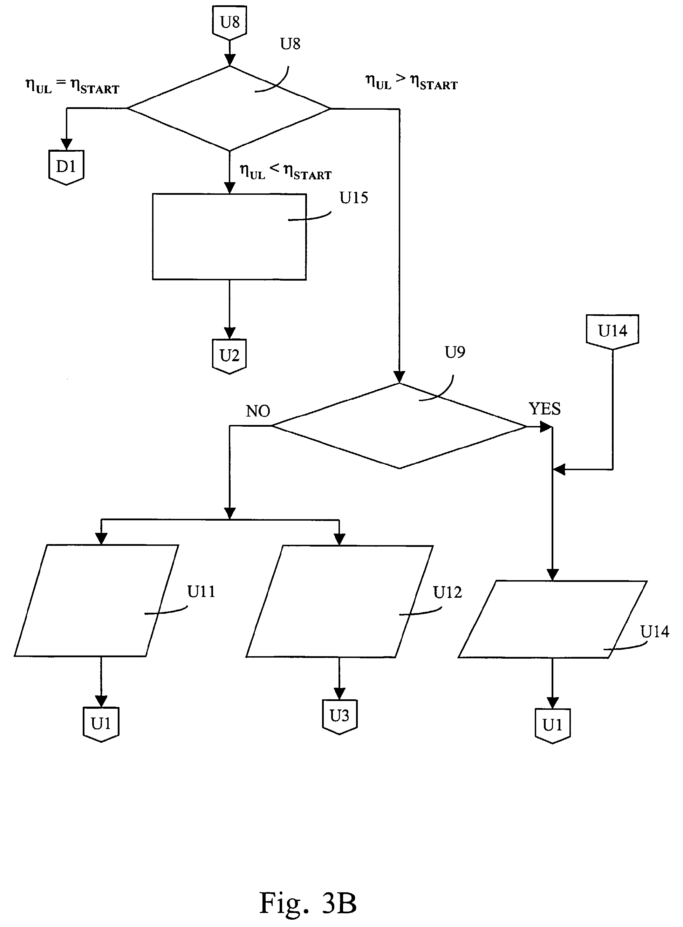

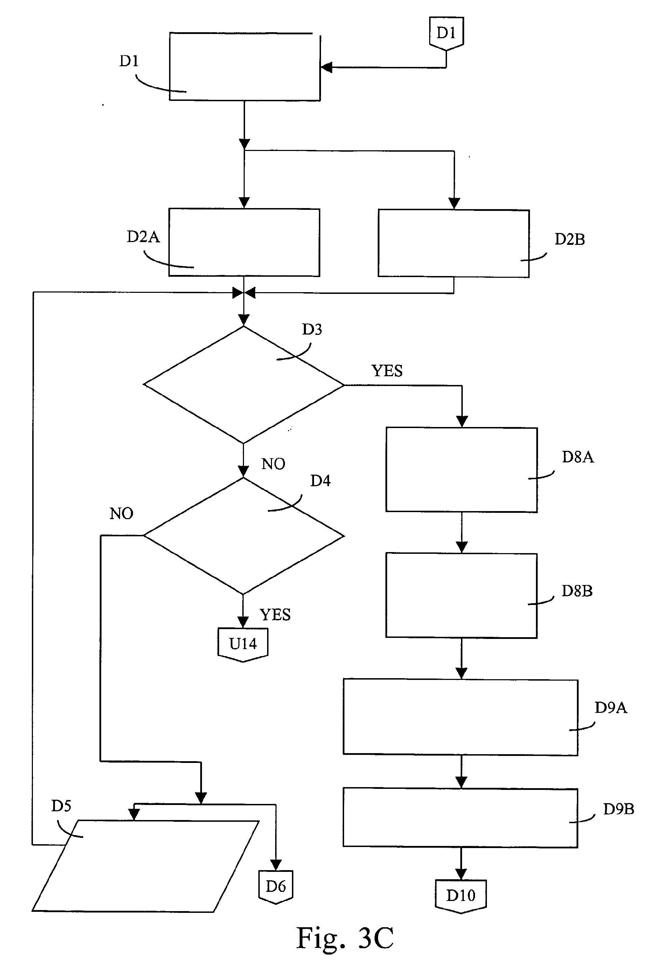

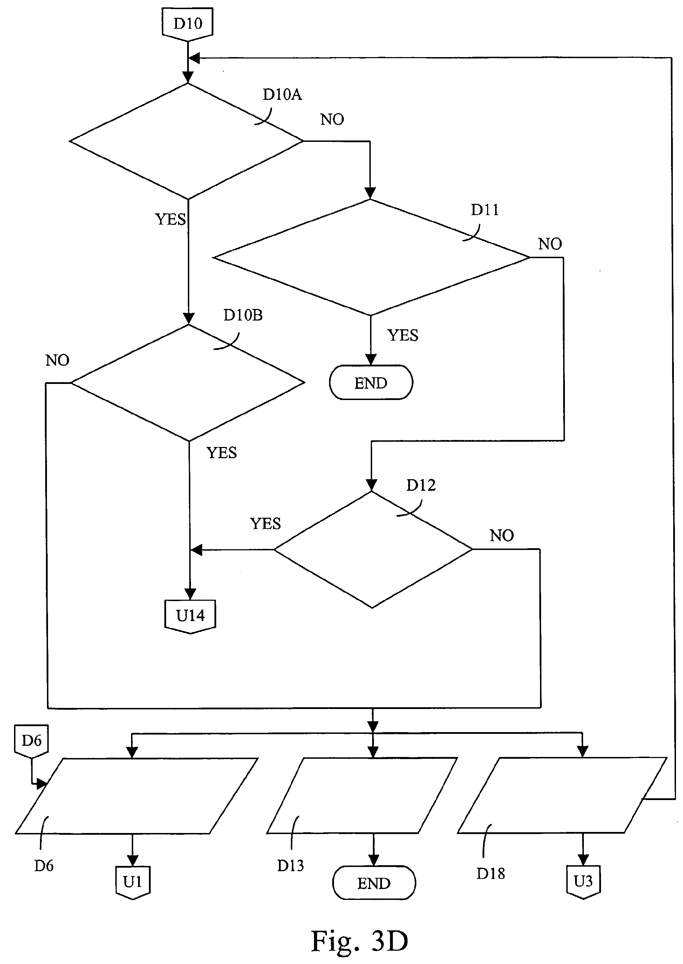

Figs.3A, 3B, 3C and 3D show in greater detail the operations or steps carried out in the second block 200.

In a first step (Step U1), the value of $\eta_{max}$ is attributed, which is an input data time, to a reference variable called $\eta_{start}$ and used, in accordance with the method described herein, to verify whether the dimensioning meets the starting specifications, as shall be described in detail hereafter.

In a second step (Step U2), the so-called "link budget" is calculated, as described in detail hereafter and, through it, the cell radius.

For instance, the calculation of the link budget and of the consequent cell radius is performed with reference to the uplink path, in four sub-steps:

I) Calculation of the EIRP (Equivalent Isotropic Radiated Power) $EIRP_{Tx}$ of the terminal, using the known formula:

$$EIRP_{Tx} = P_{tx} + G_{tx} - L_{tx} \qquad [\text{dBm}]$$

where:

$P_{tx}$     is an input data item and corresponds to the maximum power of the mobile terminal;

$G_{tx}$     is an input data item of the mobile terminal and corresponds to antenna gain in transmission, defined as the maximum gain of the antenna at the transmitter in the horizontal plane relative to an isotropic radiator;

$L_{tx}$     is an input data item of the mobile terminal and represents the connection losses of the transmitter; $L_{tx}$, in particular, takes into account all losses due to the components positioned between the output of the transmitter and the input of the antenna.

II) Calculation of the so-called sensitivity of the base station receiver ($S_{rx}$). In particular, $S_{rx}$ is the power level of the minimum signal necessary at the input of the BTS receiver to meet requirements in terms of $E_b/N_0$:

$$S_{rx} = \frac{E_b}{N_0} + R_{dB} + S_n + F + M_{imp} \qquad [\text{dBm}]$$

where:

$R_{dB}$     is the bit rate of the service expressed in dB;

$E_b/N_0$     is the ratio between the energy per bit of information and the spectral density of thermal noise + interference. The values of $E_b/N_0$ used when calculating the link budget in uplink are determined, in known fashion, by means of simulators of radio reception and transmission chains, also known;

$S_n$     is the spectral density of thermal noise. $S_n = k \cdot T_0$ with $k = 1.38 \cdot 10^{-23} J/K$ Boltzmann constant and $T_0 = 290K$ ;

$F$     is the figure of noise of the BTS receiver;

$M_{imp}$     is the so-called implementation margin; said parameter $M_{imp}$ takes into account any deviations from the ideal of the BTS receiver and is linked to factors that depend on the construction of the BTS itself.

III) Calculation of total path attenuation or "path loss" ($A$);

for each service said value ($A$) represents the maximum sustainable "path loss", i.e. the maximum loss that allows to obtain, starting from the maximum power of the mobile, assumed to be at the cell edge, the performance required from the BTS receiver:

$$A = EIRP_{Tx} - S_{rx} + G_{rx} - L_{rx} - M_{int} - M_{PC} + G_{macro} - L_{ub} - M_{sh} - M_{PL}$$

where:

$G_{rx}$     is a starting data item and it represents the reception antenna gain of the BTS, defined as the maximum antenna gain at the receiver in the horizontal plane with respect to an isotropic radiator;

$L_{rx}$     is a starting data item and it represents the connection losses of the BTS receiver. $L_{rx}$ takes into account all losses due to the components positioned between the output of the antenna and the input of the BTS receiver;

$M_{int}$     is only initially a starting data item that represents the interference margin. In CDMA based cellular systems, the coverage provided by a base transceiver station depends on the volume of traffic to be handled: the greater the traffic, the lesser the coverage provided by the cell. To take into account the influence of the load on the calculation of the coverage, said interference margin is introduced, which, as shall be seen and in accordance with the present embodiment, is linked to the load factor $\eta_{UL}$ of the cell through the formula $M_{int} = -10\log_{10}(1-\eta_{UL})$ and is updated in iterative fashion according to the dimensioning congruence tests;

$M_{PC}$  is a starting data item and it represents the power control margin; said margin is inserted in the link budget computation to allow a terminal located on the edge of the cell to increase transmission power, to compensate for the variations of the received signal due to fast fading. For this reason sometimes said margin is also called "fast fading margin";

$G_{macro}$  is a starting data item and it represents macro diversity gain; as is well known, in CDMA d cellular systems the terminal can be simultaneously connected to two base transceiver stations (the so-called soft handover condition). This condition is also called macro diversity. Thanks to said peculiar condition, it is possible to lower the requirements on the $E_b/N_0$ ratio needed for the individual connection. The macro diversity gain $G_{macro}$ takes into account the gain which the macro diversity allows to obtain against shadowing;

$L_{ab}$  is a starting data item and it represents the so-called *antenna/body loss.* In particular, the term $L_{ab}$ takes into account the fact that part of the signal is absorbed by the human body. In the case of high bit rate data services, said parameter is assumed to be 0 dB, because it is supposed that the mobile terminal is positioned at a sufficient distance from the body to consider interaction to be nil;

$M_{sh}$  is a starting data item and it represents the so-called shadowing margin. The term $M_{sh}$ takes into account the fluctuations of the received signal due to the so-called "shadowing", and it is linked, as is well known, to an additional parameter called coverage probability, which can be defined as a function of the probability of an out of service condition, also called "*outage*", taken as the probability that the signal variation due to shadowing exceeds the difference between maximum transmission power and the level of signal required in reception. Since the fluctuations due to shadowing have a log-normal distribution, to low outage probabilities (high coverage probabilities) correspond high shadowing margins. For instance, if a log normal distribution with a standard deviation of 8 dB is considered, to a 10% probability of outage corresponds a shadowing margin of 10.3 dB;

$M_{PL}$  is an input data item and it represents the so-called margin of penetration. The term $M_{PL}$ takes into account the losses due to the presence of obstacles, typically buildings, between the transmitter and the receiver.

IV) Calculation of the radius of each cell ($R_{cop}$) belonging to geo-morphologically homogeneous areas: after obtaining the value of attenuation A [dB], the cell radius $R_{COP}$ [km] is calculated in known fashion with a path-loss formula that depends on the environment under consideration.

For instance, in the case of multi-service scenarios, typical of third generation systems, such as the UMTS system as defined in the 3GPP standard (Third Generation Partnership Project), the calculation of the radius $R_{COP}$ is achieved by repeating the four sub-steps for each service and selecting the smallest amongst the radii thus obtained.

In a third step (Step U3), from the cell radius, dividing the planning area considered by the area subtended by each cell it is possible to obtain the total number of cells and the traffic offered to each cell (Step U4).

In an additional step (Step U5A or U5B) one obtains, as a function of the type of service, for instance circuit switched (CS) or packet switched (PS), the number of channels to be allocated on the uplink path. This calculation is carried out with the following mutually alternative steps:

5A] Erlang B Formula, in particular for CS (Circuit Switched) services;
5B] Simplified wait models, in particular for PS (Packet Switched) services.

In two successive steps (Step U6 e U7) the total load factor per cell of the uplink path ($\eta_{UL}$) is calculated; in particular, the following formula is used:

$$\eta_{UL} = (1+i) \cdot \sum_{j=1}^{N_S} \frac{N_j}{1 + \dfrac{W}{(E_b/N_0)_j \cdot R_j \cdot \upsilon_j}}$$

in which the following parameters are known, i.e.:

i  is the ratio between inter-cell interference and intra-cell interference;
$N_S$  is the number of services offered in the cell;
$N_j$  is the number of users employing the $j^{th}$ service;

$W$     is the chip rate;

$R_j$     is the bit rate associated to the $j^{th}$ service;

$v_j$     is the *activity factor* of *the* $j^{th}$ service;

and in which the following parameter is used in a manner considered novel:

$(E_b/N_0)_j$ is the requirement, in terms of the ratio (useful signal power) / (total interference density), for the $j^{th}$ service.

The hypothesis that is generally adopted in the prior art, for the downlink path as well, is the presence of an ideal power control procedure, such as to guarantee to the receiver the desired $E_b/N_0$ ratio for each user; the value of the $E_b/N_0$ ratio is obtained, in this hypothesis, from the results of the physical layer simulations.

One of the elements deemed distinctive of the present invention is that of considering the effect of a real power control procedure, i.e. one that is affected by delays, errors etc.

In order to consider this effect, taking into account that due to the non ideal conditions of the power control procedure the values of $E_b/N_0$ measured at the receiver follow a normal or Gaussian distribution in decibels, and that to said distribution corresponds a log-normal distribution in linear, when the average value of $E_b/N_0$ appears, the following expression was used:

$$E\left[E_b / N_0\right] = e^{\beta m_c} \cdot e^{(\beta \sigma_c)^2 / 2}$$

where:

$m_c$     is the average value of the $E_b/N_0$ ratio expressed in decibel;

$\sigma_c$     is the variance of the $E_b/N_0$ ratio expressed in decibel;

$\beta$     = ln(10)/10.

This expression, deemed to be novel for the scope of the invention, allows to take into account power control procedures in real fashion, in particular when evaluating the per service and total load factor $\eta_{UL}$. Thanks to the fact that power control is taken into account in real fashion, it is possible to take into account, in the dimensioning of the non ideal condition of the power control which is translated, for instance for equal planning scenarios, into an increase of the number of BTS required and of their equipment in terms, for example, of power amplifiers.

Given the calculation of the load factor $\eta_{UL}$, according to the present embodiment, the following step (Step U8) consists of verifying whether said value of $\eta_{UL}$ corresponds to the initially set values ($\eta_{START}$) to carry out the dimensioning operation.

In particular, if the load factor $\eta_{UL}$ thus determined coincides with $\eta_{start}$ the method according to the invention provides, in a possible embodiment, for the start of a set of steps for the dimensioning of the downlink path starting from Step D1.

This embodiment also seems novel with respect to the prior art.

If, instead, $\eta_{UL}$ is smaller than $\eta_{start}$ then the steps U2-U7 are repeated assigning a smaller value to $\eta_{start}$ (Step U15), until equality is verified (Step U8, outcome $\eta_{UL} = \eta_{start}$) in order to proceed, subsequently, to Step D1 as indicated above.

If $\eta_{UL}$ is greater than $\eta_{start}$ the method, according to an additional peculiar characteristic of the present invention, verifies whether the RAB can be renegotiated (Step U9) and, if it is, it proceeds to "*renegotiate*" at least one of the services or a type of service (Step U14).

This methodology is possible, as will be readily apparent to a person versed in the art, because CDMA networks, for instance UMTS networks are of the multi-service type, i.e. networks in which a plurality of different services is provided.

In the case of RAB of the PS (*Packet Switched*) type, according to the present embodiment, a maximum Bit Rate and a minimum Bit Rate are set, compatible with the characteristics of the quality of the service to be negotiated. Said bit rate may vary dynamically according to the contingent conditions of operation of the network, for instance the radio network (e.g. variation of the system load, variation of the radio interface load).

The dynamic variations of the bit rate of each renegotiable service are managed, as is well known, at the RRM level (Radio Resources Management), by means of functionalities, for instance, of the "*packet scheduling*" and "*congestion control*" type.

The method according to the invention takes into account, at the dimensioning level, of the impact that "*packet scheduling*" and "*congestion control*" functionalities have on the network.

In particular, the "*packet scheduling*" functionality is simulated by varying the bit rate between maximum and minimum values as indicated when, based on the *"congestion control"* functionality, the situation in which $\eta_{UL}$ exceeds $\eta_{start}$ is identified (Step U8, $\eta_{UL} > \eta_{start}$).

Moreover, by means of an additional RRM level functionality, called *"admission control"* in the specifications, the method according to the invention provides for blocking parameters able to block the traffic of each cell both on the uplink and on the downlink path.

In the case of voice CS RAB, for instance in the case of UMTS networks, the method according to the invention provides for the so-called AMR (Adaptive Multi Rate)coding whereby the service is *renegotiated* simulating voice coding at different bit rates, for instance between 4.75 Kbps and 12.2 Kbps.

According to said coding, under particular operating conditions of the radio network, for instance with high load or in poor propagation conditions, the voice service is mapped on a RAB-voice-AMR with lower bit rate that requires less of an impact from the point of view of the radio interface.

The method according to the present invention takes into account the impact of the AMR functionality on the network.

Therefore, according to the present embodiment, the method provides for *renegotiating* individual services or individual types of service, for instance by changing the bit rate of a service, for example decreasing and increasing the required value of $E_b/N_0$.

Thanks to this approach, once the parameters that define the RAB on which the service is provided are modified, the method allows to start from the initial step U1 in order to recalculate $\eta_{UL}$.

As shall be seen hereafter, the possibility of renegotiating the bearer of a service is also used to dimension the downlink path.

If instead it is not possible to renegotiate the radio bearer of any allocated service (Step U9, negative outcome), depending on the dimensioning criterion selected in the first block 100 of definition of the parameters for the analytical planning, if possible, the number of allocated carriers is, for example, increased, equally distributing the traffic offered for each carrier (Step U11), or, alternatively, the cell radius is reduced (Step U12) and the steps U3-U7 are repeated in such a way as to vary $\eta_{UL}$ until reaching the equality $\eta_{UL}=\eta_{start}$ (Step U8).

As will be readily apparent to a person versed in the art, the first choice corresponds to the strategy of minimising the number of sites used, whilst the second one corresponds to the strategy of minimising the carriers used.

Once the equality $\eta_{UL} = \eta_{start}$ is determined, the dimensioning of the downlink path is accomplished, in a possible embodiment.

The dimensioning of the downlink path has two objectives:

- to test whether the downlink codes tree is able to host all the channels of the services required; in this way, in a manner deemed novel with respect to the prior art, an additional RRM functionality, called *"code management"* is taken into account;
- to test whether limits on transmission power are obeyed, both for the individual service and for total power transmitted by the BTS (*"power management"* verification); the verification of the BTS power, which generally has a considerable impact on dimensioning, is deemed novel with respect to the prior art. This verification allows to take into account the *"admission control"* RRM functionality for the downlink path.

Since these are test operations, the method provides, on each occasion when the outcome of the test is unsatisfactory, for repeating the steps for calculating the uplink path, as will be described in detail hereafter.

Starting from the number of cells obtained from the dimensioning for the uplink path, in the downlink path the following parameters are computed:

- in a first Step D1, the traffic offered per cell belonging to a geo-morphologically homogeneous area, dividing input traffic for each service by the number of cells obtained from the dimensioning of the uplink path;
- in a second Step D2A or D2B, the number of channels that must be allocated, also taking into account the percentage of channels in soft handover; this calculation is performed, alternatively, using:

    - the Erlang B formula for CS services (Step D2A);
    - simplified wait models for PS services (Step D2B);

- in a further Step D3, from the number of channels obtained it is possible to calculate the occupation on the code tree for each cell; in particular, it is possible to verify whether the codes relating to the requested services can be hosted on the code tree associated to each BTS.

This verification entails a series of alternatives.

If it is not possible to host all codes provided in downlink (Step D3, negative outcome) and if at least one service can be renegotiated (Step D4, positive outcome), the method returns to Step U14 so that a different RAB is renegotiated for that service.

In this way the *"packet scheduling"* and *"congestion control"* functionality is taken into account on the downlink path.

If there is no renegotiable service (Step D4, negative outcome), then two alternatives are possible, depending on the choices made in the block 100 of initial choices for the uplink and downlink path in regard to possible network development strategies:

- Reducing the radius of the cell until obtaining a number of downlink channels that can be hosted by a single code tree (Step D5 followed by verification Step 3 with positive outcome);
- Allocating, if available, an additional carrier (Step D6). In this case the traffic is subdivided between the carriers and the method starts back from Step U1 to recalculate $\eta_{UL}$.

If the first possibility is chosen (Step D5 and Step D3, positive outcome), or if the code occupation test had a positive outcome (Step D3, positive outcome), the load factor is calculated for each service for each individual cell on the downlink path $\eta_{DL}$, based on the following known formula (Steps D8A and D8B):

$$\eta_{DL} = \sum_{i=1}^{I} \frac{(E_b / N_0)_i \cdot R_i \cdot \upsilon_i}{W} \cdot [(1 - \alpha_i) + i_i]$$

where:

I   is the number of users in the cell;

$i_i$   is the ratio between the inter-cell interference and the intra-cell interference received by the $i^{th}$ terminal. In the algorithm, an average value for all users is employed for this parameter;

W   is the chip rate;

$R_i$   is the bit rate associated with the $i^{th}$ terminal;

$v_i$   is the activity *factor* of the $i^{th}$ terminal;

$\alpha_i$   is the orthogonality factor of the $i^{th}$ terminal which depends on the conditions of propagation ($\alpha_i$=1 in case of perfect orthogonality between the signals in downlink). In the algorithm, an average value for all users is employed for this parameter;

$(E_b/N_0)_i$   is the requirements, in terms of useful signal power/total interference density ratio, for the $i^{th}$ terminal.

After determining the values of $\eta_{DL}$ it is possible to use the following known formula to calculate the transmission power for individual services and total transmission power (Steps D9A and D9B) using the following formula:

$$P = \frac{P_N \sum_{i=1}^{I} \frac{(E_b / N_0)_i \cdot R_i \cdot \upsilon_i}{W} \cdot L_{m,i}}{1 - \eta_{DL}}$$

where:

$P_N$   is thermal noise power;

$L_{m,i}$   is the attenuation undergone by the signal in the downlink path connecting the base station to the terminal.

After calculating the power, the method according to the present invention proceeds to compare maximum power sustainable per traffic channel for a service (Power Management test) with the maximum power calculated for the same service (Step D10A);

If the maximum calculated power per channel of at least one service exceeds maximum power (Step D10A, positive outcome) and the service can be renegotiated (Step D10B, positive outcome) the method returns to step U14 and the RAB is renegotiated.

The effect of renegotiation is dual: increase in $(E_b/N_0)_i$ and decrease in bit rate $R_i$. The preponderant effect is the latter, which entails the decrease of the power required in transmission and consequent variation of $\eta_{UL}$.

If it is not possible to renegotiate a different RAB (Step D10B, negative outcome), according to the present method it is possible, taking into account the dimensioning criteria chosen in the first block 100 and until the limit on power is obeyed, to complete the dimensioning process, in alternative fashion:

- by increasing, if possible, the number of carriers used (Step D6) and starting anew from Step U1;
- by decreasing cell radius (Step D18) and recycling on Step D10A;
- by increasing BTS power until the power limit is obeyed.

If no service exceeds the power limits (Step D10A, negative outcome), in accordance with the present embodiment a last test on total transmitted power is conducted (Step D11).
If total power P determined is lower than the maximum power available, the method is completed and the determined values correspond to the dimensioning of the network (Step D11, positive outcome).
In the opposite case (Step D11, negative outcome) and if the services are renegotiable (Step D12, positive outcome) the RAB are renegotiated for the services that are still renegotiable (Step U14) and the calculation process is repeated starting from Step U1.
If there are no renegotiable services, taking into account the dimensioning criterion selected in the first block 100 and until the limit on power is obeyed, ending the dimensioning process in alternative fashion through the following choices:

- by increasing, if possible, the number of carriers (Step D6) and starting again the calculation process from Step U1;
- by decreasing cell radius until the limit on total maximum transmission power is obeyed (Step D18) and starting again from Step U3;.
- by increasing the power of the BTS until the power limit is obeyed.

The method described herein, and the corresponding system configured to implement the method, therefore allow, in a manner deemed innovative, both to:

- dimension, in joint fashion, the uplink and the downlink path for a determined territory; and to
- negotiate in dynamic fashion the services, both for the uplink and for the downlink path, taking into account RRM functionalities such as:

  - Power control;
  - Packet Scheduling;
  - Congestion control;
  - Admission control;
  - AMR voice coding;
  - Code management; and
  - Power management.

Thanks to these characteristics, the method according to the present invention allows to optimise the values of maximum sustainable load per cell and, hence, to achieve a greater accuracy in the analytical planning of the number of sites, number of BTS and associated equipment. In particular, the results verified experimentally differ from those achievable with the prior art by percentages in the order of 20-30%.
Obvious modifications or variations can be made to the description provided above, in dimensions, shapes, materials, components, circuit elements, connections and contacts, as well as in the details of the circuitry and of the construction illustrated herein and in the operating method as set out in the claims that follows.

## Claims

1. Method for dimensioning a radio network based on Code Division Multiple Access techniques or CDMA, comprising the steps of:

    - providing (U1) at least a value of maximum sustainable load per cell given a plurality of services provided;
    - determining (U6, U7, D8A, D8B) for each cell a load factor per cell on the basis of input parameters that are representative of coverage requirements and/or capacity requirements and/or quality requirements;

    **characterised in that** it comprises the steps of:

    - verifying (U8, D10A) whether the determined load factor per cell corresponds to the maximum load sustainable by the cell and, if the determined load factor per cell exceeds the maximum sustainable load per cell,
    - dynamically negotiating (U14) at the Radio Resource Management level at least one of the services provided by the network into the cell by dynamically varying the bit rate associated to said at least one provided service in such a way that the determined load factor per cell becomes smaller than or equal to the maximum sustainable load per cell or it is optimised by taking into account the characteristics of the network.

2. Method as claimed in claim 1, **characterised in that** the load factor per cell is determined (U6, U7, D8A, D8B) by taking into account real "power control" procedures, attributing to the ratio between useful signal power and total interference density of the cell a normal distribution in decibels.

3. Method as claimed in claim 1 or 2, **characterised in that** the step of determining (U6, U7) the load factor per cell is carried out for the uplink radio path.

4. Method as claimed in claim 3, **characterised in that** the step of dynamically negotiating (U14) at least one of the services provided by the network in the cell comprises the step of dynamically varying the bit rate of a packet scheduling functionality based on a congestion control functionality.

5. Method as claimed in claims 1 or 2, **characterised in that** the step of determining (D8A, D8B) the load factor per cell is carried out for the downlink radio path.

6. Method as claimed in claim 5, **characterised in that** the step of dynamically negotiating (U14) at least one of the services provided comprises the step of dynamically varying the bit rate of a packet scheduling functionality based on a congestion control functionality.

7. System for dimensioning a radio network based on Code Division Multiple Access or CDMA techniques, comprising a computerised work station (50) programmed for implementing the method as claimed in any of the previous claims.

8. Computer product able to be loaded directly into the internal memory of a computerised work station (50) and comprising portions of software code to carry out, when the product is executed on the work station, the method as claimed in any of the claims from 1 through 6.

**Patentansprüche**

1. Verfahren zum Dimensionieren eines Funknetzwerkes auf der Basis von Codemultiplex-Vielfachzugriffsverfahren oder CDMA (Code Division Multiple Access), die folgenden Schritte umfassend:

- Bereitstellen (U1) mindestens eines Wertes einer maximalen dauerhaften Last pro Zelle bei einer gegebenen Vielzahl von bereitgestellten Diensten;
- Bestimmen (U6, U7, D8A, D8B), für jede Zelle, eines Lastfaktors pro Zelle auf der Basis von Eingangsparametern, die für die Versorgungsanforderungen und/oder Kapazitätsanforderungen und/oder Qualitätsanforderungen repräsentativ sind;

**dadurch gekennzeichnet, dass** es die folgenden Schritte umfasst:

- Überprüfen (U8, D10A) ob der bestimmte Lastfaktor pro Zelle der maximalen dauerhaften Last pro Zelle entspricht, und wenn der bestimmte Lastfaktor pro Zelle die maximale dauerhafte Last pro Zelle übersteigt,
- dynamisches Verhandeln (U14) auf dem Funkressourcenverwaltungslevel mindestens eines der Dienste, der durch das Netzwerk in die Zelle durch dynamisches Variieren der Bitrate bereitgestellt wird, die dem mindestens einen bereitgestellten Dienst dergestalt zugeordnet ist, dass der bestimmte Lastfaktor pro Zelle kleiner oder gleich der maximalen dauerhaften Last pro Zelle wird, oder optimiert wird, indem die Eigenschaften des Netzwerks berücksichtigt werden.

2. Verfahren nach Anspruch 1, **dadurch gekennzeichnet, dass** der Lastfaktor pro Zelle bestimmt wird (U6, U7, D8A, D8B), indem reale Vorgänge zur "Leistungssteuerung" berücksichtigt werden, die dem Verhältnis zwischen nützlicher Signalleistung und gesamter Interferenzdichte der Zelle eine normale Verteilung in Dezibel zuweisen.

3. Verfahren nach Anspruch 1 oder 2, **dadurch gekennzeichnet, dass** der Schritt des Bestimmens (U6, U7) des Lastfaktors pro Zelle für den Uplink-Funkpfad ausgeführt wird.

**4.** Verfahren nach Anspruch 3, **dadurch gekennzeichnet, dass** der Schritt des dynamischen Verhandelns (U14) mindestens eines Dienstes, der durch das Netzwerk in der Zelle bereitgestellt wird, den Schritt des dynamischen Variierens der Bitrate einer Paketzeitplanungsfunktionalität auf der Basis einer Überlastungssteuerungsfunktionalität umfasst.

**5.** Verfahren nach Anspruch 1 oder 2, **dadurch gekennzeichnet, dass** der Schritt des Bestimmens (D8A, D8B) des Lastfaktors pro Zelle für den Downlink-Funkpfad ausgeführt wird.

**6.** Verfahren nach Anspruch 5, **dadurch gekennzeichnet, dass** der Schritt des dynamischen Verhandelns (U14) mindestens eines bereitgestellten Dienstes, den Schritt des dynamischen Variierens der Bitrate einer Paketzeitplanungsfunktionalität auf der Basis einer Überlastungssteuerungsfunktionalität umfasst.

**7.** System zum Dimensionieren eines Funknetzes auf der Basis von Codemultiplex-Mehrfachzugriffsverfahren oder CDMA-Verfahren, eine computerisierte Arbeitsstation (50) umfassend, die zum Implementieren des Verfahrens nach einem der vorhergehenden Ansprüche programmiert ist.

**8.** Computerprodukt, das in der Lage ist, direkt in den computereigenen Speicher einer computerisierten Arbeitsstation (50) geladen zu werden und Teile von Softwarecode umfasst, um, wenn das Produkt auf der Arbeitsstation ausgeführt wird, das Verfahren nach einem der Ansprüche 1 bis 6 auszuführen.

**Revendications**

**1.** Procédé permettant le dimensionnement d'un réseau radio faisant appel à des techniques d'Accès Multiple par Répartition de Code (ou AMRC), comprenant les étapes consistant à :

- fournir (U1) au moins une valeur de charge maximale admissible par cellule donnée pour une pluralité de services fournis,
- déterminer (U6, U7, D8A, D8B), pour chaque cellule, un coefficient de charge par cellule en fonction de paramètres d'entrée qui sont représentatifs des besoins en matière de couverture, et/ou des besoins en matière de capacité et/ou des besoins en matière de qualité,

**caractérisé en ce qu'**il comprend les étapes consistant à :

- vérifier (U8, D10A) si le coefficient de charge déterminé par cellule correspond à la charge maximale admissible par la cellule et, si le coefficient de charge déterminé par cellule dépasse le coefficient de charge maximale admissible par cellule,
- négocier (U14) dynamiquement, au niveau de la Gestion des Ressources de Radiocommunication, au moins l'un des services fournis par le réseau dans la cellule, en faisant varier dynamiquement le débit binaire associé au dit au moins un service fourni, de telle manière que le coefficient de charge déterminé par cellule devienne inférieur ou égal à la charge maximale admissible par cellule ou soit optimisé en tenant compte des caractéristiques du réseau.

**2.** Procédé selon la revendication 1, **caractérisé en ce que** le coefficient de charge par cellule est déterminé (U6, U7, D8A, D8B) en prenant en compte les procédures de « commande de puissance » réelle, en attribuant au ratio entre la puissance de signal utile et la densité d'interférence totale de la cellule, une distribution normale en décibels.

**3.** Procédé selon la revendication 1 ou 2, **caractérisé en ce que** l'étape de détermination (U6, U7) du coefficient de charge par cellule est exécutée pour la liaison radio montante.

**4.** Procédé selon la revendication 3, **caractérisé en ce que** l'étape de négociation dynamique (U14) d'au moins l'un des services fournis par le réseau dans la cellule comprend l'étape consistant à faire varier dynamiquement le débit binaire d'une fonctionnalité de planification de paquets fondée sur une fonctionnalité de contrôle de l'encombrement.

**5.** Procédé selon les revendications 1 ou 2, **caractérisé en ce que** l'étape de détermination (D8A, D8B) du coefficient de charge par cellule est exécutée pour la liaison radio descendante.

**6.** Procédé selon la revendication 5, **caractérisé en ce que** l'étape de négociation dynamique (U14) d'au moins l'un des services fournis comprend l'étape consistant à faire varier dynamiquement le débit binaire d'une fonctionnalité de planification de paquets fondée sur une fonctionnalité de contrôle de l'encombrement.

7.  Système permettant le dimensionnement d'un réseau radio faisant appel à des techniques d'Accès Multiple par Répartition de Code ou AMRC, comprenant un poste de travail informatique (50) programmé pour mettre en oeuvre le procédé selon l'une quelconque des revendications précédentes.

8.  Produit informatique capable d'être chargé directement dans la mémoire interne d'un poste de travail informatique (50) et comprenant des portions de code de logiciel permettant d'exécuter, quand le produit est mis en oeuvre sur le poste de travail, le procédé selon l'une quelconque des revendications 1 à 6.

50

52

51

56

55

## Fig. 1

100

200

## Fig. 2

Fig. 3A

U8

U8

$\eta_{UL} = \eta_{START}$

$\eta_{UL} > \eta_{START}$

D1

$\eta_{UL} < \eta_{START}$

U15

U2

U14

U9

NO

YES

U11

U12

U14

U3

U1

U1

Fig. 3B

Fig. 3C

Fig. 3D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0049824 A

**Non-patent literature cited in the description**

- Radio Network Planning. **H. HOLMA ; A. TOSKALA.** WCDMA for UMTS. Wiley & Sons Ltd, June 2000